# EUROPEAN PATENT SPECIFICATION

(11) **EP 2 839 526 B1**
(45) Date of publication and mention of the grant of the patent: **12.06.2019**
(21) Application number: 13721469.8
(22) Date of filing: 19.04.2013
(51) Int. Cl.: H01M 4/86, H01M 4/88, H01M 12/08, H01M 8/023, H01M 8/0241, H01M 8/0247, H01M 4/38, H01M 4/90

(54) **METAL/AIR BATTERY WITH OXIDATION RESISTANT CATHODE**
METALL-LUFT-BATTERIE MIT OXIDATIONSBESTÄNDIGER KATHODE
ACCUMULATEUR MÉTAL-AIR À CATHODE RÉSISTANTE À L'OXYDATION

(30) Priority: 19.04.2012 US 201261635599 P
(43) Date of publication of application: 25.02.2015
(73) Proprietor: Robert Bosch GmbH, 70442 Stuttgart (DE); Lohmann, Timm, Mountain View, CA 94043 (US); Christensen, John F., Mountain View, CA 94043 (US); Kozinsky, Boris, Waban, MA 02468 (US); Albertus, Paul, Mountain View, CA 94043 (US); Sanchez-Carrera, Roel, Sommerville, MA 02143 (US)
(72) Inventor: LOHMANN, Timm, Mountain View, CA 94043 (US); CHRISTENSEN, John, F., Mountain View, CA 94043 (US); KOZINSKY, Boris, Waban, MA 02468 (US); ALBERTUS, Paul, Mountain View, CA 94043 (US); SANCHEZ-CARRERA, Roel, Sommerville, MA 02143 (US)
(74) Representative: Isarpatent
(86) International application number: PCT/US2013/037421
(87) International publication number: WO 2013/159022

(56) References cited:
- EP-A2- 2 410 079
- JP-A- 2011 198 662
- US-A1- 2008 176 124
- US-A1- 2012 040 254

## Description

This application claims the benefit of U.S. Provisional Application No. 61/635,599, filed April 19, 2012.

### TECHNICAL FIELD:

This invention relates to batteries and more particularly to metal/air based batteries.

### BACKGROUND

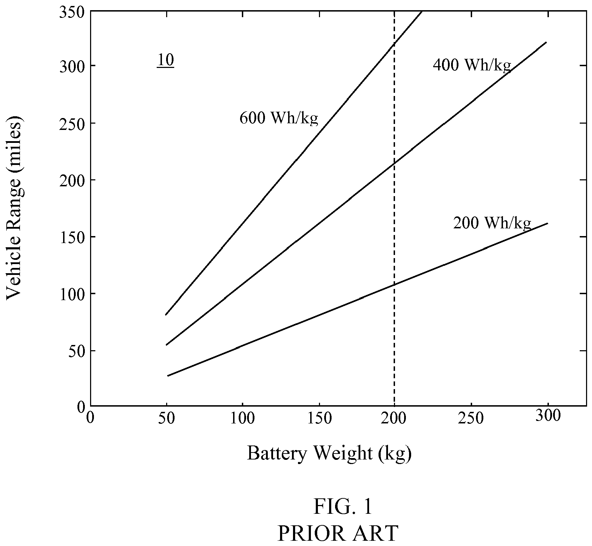

FIG. 1 depicts a chart 10 showing the range achievable for a vehicle using battery packs of different specific energies versus the weight of the battery pack. In the chart 10, the specific energies are for an entire cell, including cell packaging weight, assuming a 50% weight increase for forming a battery pack from a particular set of cells. The U.S. Department of Energy has established a weight limit of 200 kg for a battery pack that is located within a vehicle. Accordingly, only a battery pack with about 600 Wh/kg or more can achieve a range of 300 miles.

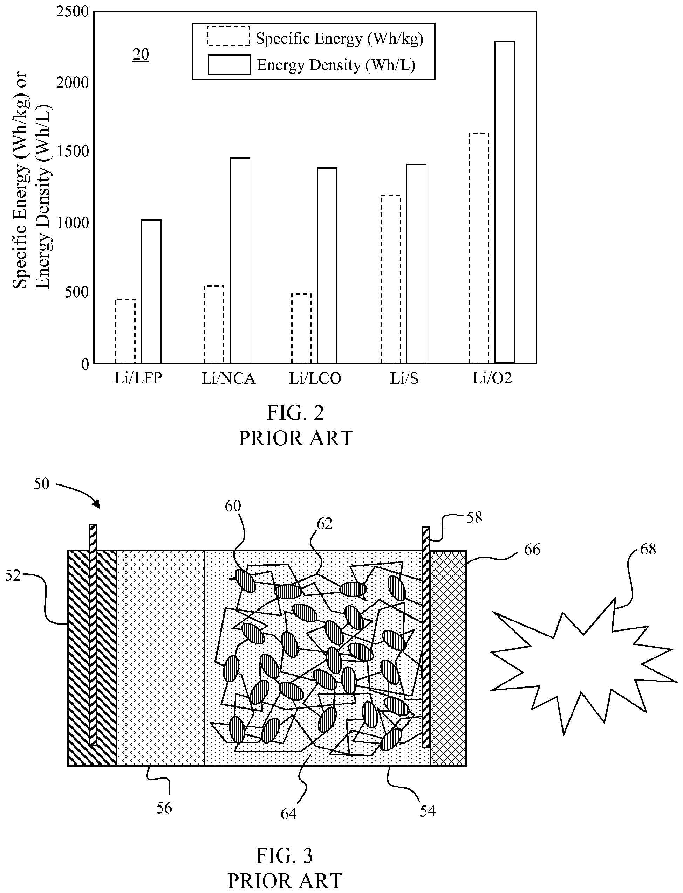

Various lithium-based chemistries have been investigated for use in various applications including in vehicles. FIG. 2 depicts a chart 20 which identifies the specific energy and energy density of various lithium-based chemistries. In the chart 20, only the weight of the active materials, current collectors, binders, separator, and other inert material of the battery cells are included. The packaging weight, such as tabs, the cell can, etc., are not included. As is evident from the chart 20, lithium/air batteries, even allowing for packaging weight, are capable of providing a specific energy >600 Wh/kg and thus have the potential to enable driving ranges of electric vehicles of more than 300 miles without recharging, at a similar cost to typical lithium ion batteries. While lithium/air cells have been demonstrated in controlled laboratory environments, a number of issues remain before full commercial introduction of a lithium/air cell is viable as discussed further below.

A typical lithium/air electrochemical cell 50 is depicted in FIG. 3. The cell 50 includes a negative electrode 52, a positive electrode 54, a porous separator 56, and a current collector 58. The negative electrode 52 is typically metallic lithium. The positive electrode 54 includes carbon particles such as particles 60 possibly coated in a catalyst material (such as Au or Pt) and suspended in a porous, electrically conductive matrix 62. An electrolyte solution 64 containing a salt such at LiPF₆ dissolved in an organic solvent such as dimethyl ether or CH₃CN permeates both the porous separator 56 and the positive electrode 54. The LiPF₆ provides the electrolyte with an adequate conductivity which reduces the internal electrical resistance of the cell 50 to allow a high power.

A portion of the positive electrode 52 is enclosed by a barrier 66. The barrier 66 in FIG. 3 is formed from an aluminum mesh configured to allow oxygen from an external source 68 to enter the positive electrode 54. The wetting properties of the positive electrode 54 prevent the electrolyte 64 from leaking out of the positive electrode 54. Oxygen from the external source 68 enters the positive electrode 54 through the barrier 66 while the cell 50 discharges, and oxygen exits the positive electrode 54 through the barrier 66 as the cell 50 is charged. In operation, as the cell 50 discharges, oxygen and lithium ions are believed to combine to form a discharge product Li₂O₂ or Li₂O in accordance with the following relationship:

*Li* ↔ *Li*⁺ + *e*⁻ (negative electrode)

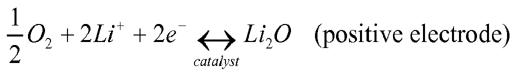

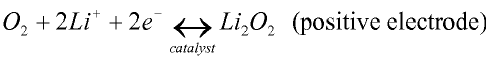

The positive electrode 54 in a typical cell 50 is a lightweight, electrically conductive (∼Ωcm) material which has a porosity of greater than 80% to allow the formation and deposition/storage of Li₂O₂ in the cathode volume. The ability to deposit the Li₂O₂ directly determines the maximum capacity of the cell. In order to realize a battery system with a specific energy of 600 Wh/kg or greater, a plate with a thickness of 100 µm must have a capacity of about 20 mAh/cm².

Materials which provide the needed porosity include carbon black, graphite, carbon fibers, and carbon nanotubes. There is evidence that each of these carbon structures undergo an oxidation process during charging of the cell, due at least in part to the harsh environment in the cell (pure oxygen, superoxide and peroxide ions, formation of solid lithium peroxide on the cathode surface, and electrochemical oxidation potentials of >3V (vs. Li/Li⁺)).

Oxidation of the carbon material in combination with the presence of lithium ions leads to the formation of a surface layer of insulating lithium carbonate (Li₂CO₃) on the cathode. The oxidation reaction and the surface layer cause an increasing charging resistance of the cell resulting in charge potentials that can exceed 4V (vs. Li/Li⁺). Consequently, the cell cannot be recharged completely and/or the charge efficiency is greatly reduced. Furthermore, the calendric life-time of the cell is also reduced.

The forgoing processes also create the possibility of non-electrochemical reaction of the high surface area carbon material with oxygen dissolved in the electrolyte. This can significantly lower the discharge capacity of the cell, because of increased electrode impedance due to lithium carbonate formation on the surface. Additional prior art in the field is described in patent documents JP 2011 198662 A, US 2012/040254 A1, US 2008/176124 A1 and EP 2 410 079 A2.

What is needed therefore is a cathode material which combines high conductivity with chemical stability to prevent oxidation. A further need exists for a chemically stable surface with high surface area//porosity.

### Summary

The present invention provides a method of forming a metal/air electrochemical cell as recited in claim 1. The present invention also provides a metal/air electrochemical cell as recited in claim 2. Preferred features of the invention are recited in the independent claims. In one embodiment, therefore, a method of forming a method of forming a metal/air electrochemical cell in one embodiment includes forming a negative electrode including a form of lithium as an active ingredient, providing a three dimensional network formed from an inert material, forming a positive electrode using the three dimensional network, providing a separator between the negative electrode and the positive electrode, and providing for a supply of oxygen to the positive electrode.

In another embodiment, a metal/air electrochemical cell includes a negative electrode including a metal active ingredient, a positive electrode including a three dimensional network formed from an inert material, a separator between the negative electrode and the positive electrode, and an oxygen supply operably connected to the positive electrode.

### BRIEF DESCRIPTION OF DRAWINGS

FIG. 1 depicts a plot showing the relationship between battery weight and vehicular range for various specific energies;
FIG. 2 depicts a chart of the specific energy and energy density of various lithium-based cells;
FIG. 3 depicts a prior art lithium-air (Li/air) cell including two electrodes, a separator, and an electrolyte;
FIG. 4 depicts a Li/air electrochemical cell including a three dimensional silicon carbon (SiC) cathode structure in accordance with principles of the invention;
FIG. 5 depicts a substrate on which nanowires have been formed which can be used to form silicon carbide cathode structures;
FIG. 6 depicts a silicon carbide cathode structure formed using the substrate and nanowires of FIG. 5;
FIG. 7 depicts a porous silica structure such as silica Aerogel which can be used to form silicon carbide cathode structures; and
FIG. 8 depicts a silicon carbide cathode structure formed using the porous silica structure of FIG. 7.

### DETAILED DESCRIPTION

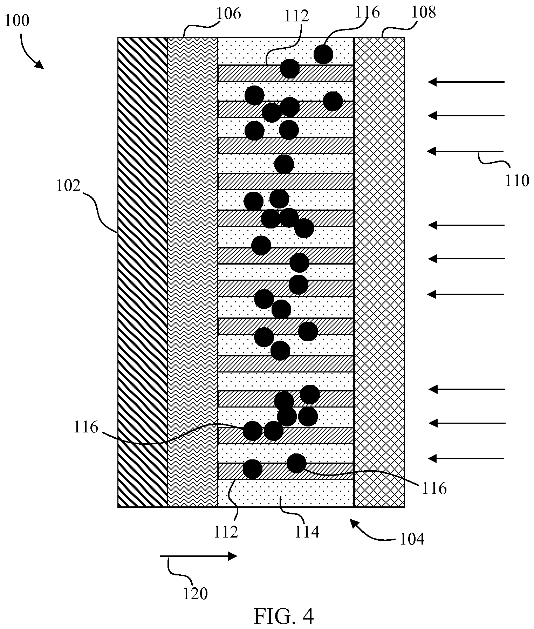

A schematic of an electrochemical cell 100 is shown in FIG. 4. The electrochemical cell 100 includes a negative electrode 102 separated from a positive electrode 104 by a porous separator 106. The separator 106 prevents the negative electrode 102 from electrically connecting with the positive electrode 104. The negative electrode 102 may be formed from lithium metal or a lithium-insertion compound (e.g., graphite, silicon, tin, LiAl, LiMg, Li₄Ti₅O₁₂), although Li metal affords the highest specific energy on a cell level compared to other candidate negative electrodes.

A gas diffusion layer 108 allows air (indicated by the arrows 110) to enter and exit the positive electrode 104. The positive electrode 104 in this embodiment includes a number of cathodes 112 which are immersed in an electrolyte 114. Metal oxide portions 116, which in one embodiment are Li₂O₂ portions, are also located within the positive electrode 104.

The electrolyte solution 114 is present in the positive electrode 104 and in some embodiments in the separator 106. In the exemplary embodiment of FIG. 4, the electrolyte solution 114 includes a salt, LiPF₆ (lithium hexafluorophosphate), dissolved in an organic solvent mixture. The organic solvent mixture may be any desired solvent. In certain embodiments, the solvent may be dimethyl ether (DME), acetonitrile (MeCN), ethylene carbonate, or diethyl carbonate.

The air 110 is provided by the atmosphere or any vessel suitable to hold oxygen and other gases supplied to and emitted by the positive electrode 104. In embodiments wherein a reservoir other than the atmosphere is used, a flow field, hose, or other conduit may be used to direct air from the reservoir to the positive electrode 104. Various embodiments of reservoirs are envisioned, including rigid tanks, inflatable bladders, and the like. In FIG. 4, the gas diffusion layer 108 is a mesh which permits oxygen and other gases to flow between the positive electrode 104 and the reservoir while also preventing the electrolyte 114 from leaving the positive electrode 104.

The electrochemical cell 100 may discharged with lithium metal in the negative electrode 102 ionizing into a Li⁺ ion with a free electron e⁻. Li⁺ ions travel through the separator 106 in the direction indicated by arrow 120 toward the positive electrode 104. Oxygen is supplied from the reservoir through the gas diffusion layer 108 as indicated by the arrows 110. Free electrons e⁻ flow into the positive electrode 104 and through the cathodes 112.

The cathodes 112 provide a porous cathode structure including an inert material such as SiC, ZnO, Ir, Au, Pt and the like. Because the cathode material is highly inert, the cell 100 exhibits increased cycleability and lifetime. In various embodiments not being part of the present invention, the cathodes 112 are a 3D structure like a network of channels, pores, or cavities. In the embodiments of the present invention, the cathodes 112 are a network of fibers, wires, or tubes. The cathodes 112 are optionally structured as a dense "lawn" of nano fibers or nanotubes on a conductive substrate.

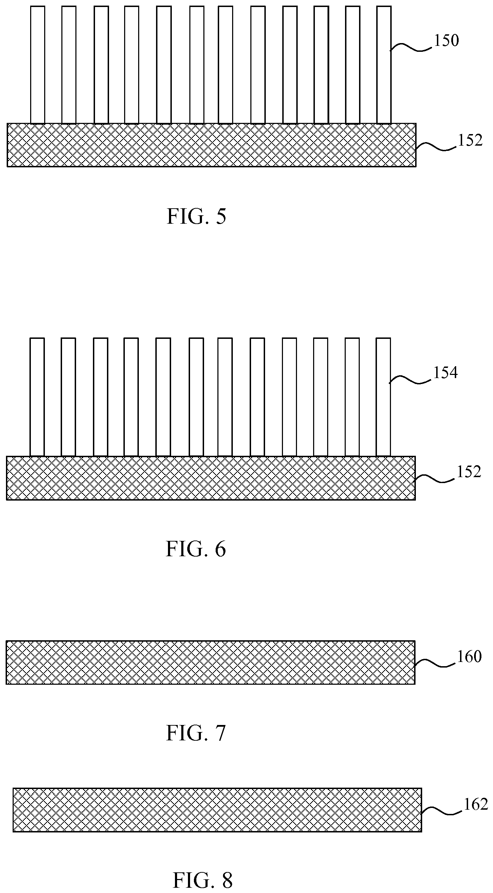

The cathodes 112 in one embodiment are formed by conversion of silicon, carbon, or silica into SiC. Referring initially to FIG. 5, a lawn of nano-fibers is formed in one embodiment by providing a number of nanowires 150. The nanowires 150 in FIG. 5 are grown on a gas diffusion layer 152 using a nickel catalyst using any desired process. The nanowires 150 in one embodiment are carbon nanowires. In another embodiment, the nanowires 150 are silicon nanowires.

The nanowires 150 are then exposed to a carbon or silicon precursor gas such as alkane, silane gases or other volatile organo-carbon/organo-silicon compounds at a high temperature. For silicon precursors, a temperature on the order of 2000°C is used while for carbon precursors a temperature of about 1000°C is used. The high temperature exposure causes the silicon/carbon structure to be converted into silicon carbide, resulting in the silicon carbide lawn 154 depicted in FIG. 6.

In another embodiment, a porous silicon carbide structure is formed by first providing a highly porous ultralight silica structure. One such structure is available in the form of silica Aerogel. Aerogel exhibits superior mechanical stability. Fabrication of a cathode using Aerogel begins by providing a slab 160 of Aerogel as depicted in FIG. 7. The porous silica slab 160, when formed from Aerogel, can be used as a stand-alone structure without a gas diffusion layer. Conversion of the silica slab 160 is performed using a carbon precursor (CH4 or similar hydrocarbons, aromatics etc...). The slab 160 is subjected to the selected carbon precursor at a temperature of about 1000°C. The high temperature exposure causes the silica Aerogel structure to be converted into silicon carbide, resulting in the silicon carbide structure 162 depicted in FIG. 8. The silicon carbide structure in some embodiments is then doped using nitrogen or phosphorous in a subsequent step in order to adjust the electrical conductivity.

The silicon carbide cathode structures described above in some embodiments include inert material like SiC, ZnO, Ir, Au, Pt. The resulting silicon carbide cathode structure is highly inert leading to an increased cycleability and lifetime. The silicon carbide cathode structures in different embodiments are a network of channels/pores/cavities or a fiber/wire/tube network, or a dense "lawn" of nano fibers, nano wires or nano tubes on a conductive substrate.

In the various embodiments, the silicon carbide cathode structures exhibit a significantly reduced charge potential compared to conventional carbon cathodes. Moreover, the silicon carbide cathode has a similar or higher discharge capacity and conductivity (rate capability) than state-of-the-art cathodes based on carbon. Furthermore, the design/process for the silicon carbide cathode structures described above can be easily integrated in existing cell production process.

The above described cathode and method of making a cathode, provides high conductivity and high surface area/porosity with chemical stability which prevents oxidation and the resulting increase of the charge potential. The above described cathode and method of making a cathode also leads to an increased discharge capacity, because chemical oxidation of the electrode during discharge is prevented. The above described cathode and method of making a cathode therefore positively affects important characteristics of the cell increasing reversibility/ rechargeability, roundtrip efficiency, energy and life time of the cell.

While the invention has been illustrated and described in detail in the drawings and foregoing description, the same should be considered as illustrative and not restrictive in character. Only the preferred embodiments have been presented and all changes, modifications and further applications that come within the scope of the invention as defined in the claims are desired to be protected.

## Claims

1. A method of forming a metal/air electrochemical cell (100), comprising:
a) forming a negative electrode (102) including a form of lithium as an active ingredient;
b) providing a three dimensional network formed from an inert material, by
b1) providing a three dimensional carbon network of carbon nanowires (150) or carbon nano-tubes (150) grown on a gas diffusion layer (152) using a nickel catalyst; and
b2) exposing the three dimensional carbon network to a silicon precursor at a temperature of 2000°C causing the three dimensional carbon network to be converted to a three dimensional silicon carbide network;
c) doping the three dimensional silicon carbide network to adjust the electrical conductivity of the three dimensional silicon carbide network;
d) forming a positive electrode (104) including a plurality of electrodes (112) using the three dimensional network;
e) providing a separator (106) between the negative electrode (102) and the positive electrode (104); and
f) providing for a supply of oxygen to the positive electrode (104) by the gas diffusion layer (108; 152).

2. A metal/air electrochemical cell (100), comprising:
2.1 a negative electrode (102) including a form of lithium as an active ingredient;
2.2 a positive electrode (104) including a plurality of electrodes (112) formed by a three dimensional network formed from an inert material, the three dimensional network being a silicon carbide three dimensional network converted from a three dimensional carbon network by having been exposed to a silicon precursor at a temperature of 2000°C, wherein the three dimensional carbon network is formed by carbon nanowires (150) or carbon nano-tubes (150) grown on a gas diffusion layer (152) using a nickel catalyst;
2.3 a separator (106) between the negative electrode (102) and the positive electrode (104); and
2.4 an oxygen supply operably connected to the positive electrode (104) formed by the gas diffusion layer (108, 152),
2.5 the three dimensional silicon carbide network is a doped silicon carbide network.

## Patentansprüche

1. Verfahren zum Bilden einer elektrochemischen Metall/Luft-Zelle (100), das Folgendes umfasst:
a) Bilden einer negativen Elektrode (102) einschließlich einer Form von Lithium als ein aktiver Bestandteil;
b) Bereitstellen eines dreidimensionalen Netzwerks, das aus einem inerten Material gebildet ist, durch
b1) Bereitstellen eines dreidimensionalen Kohlenstoffnetzwerks aus Kohlenstoffnanodrähten (150) oder Kohlenstoffnanoröhrchen (150), die auf einer Gasdiffusionsschicht (152) unter Verwendung eines Nickelkatalysators aufgewachsen sind; und
b2) Aussetzten des dreidimensionalen Kohlenstoffnetzwerks gegenüber einem Siliciumvorläufer bei einer Temperatur von 2000 °C, was bewirkt, dass das dreidimensionale Netzwerk in ein dreidimensionales Siliciumcarbidnetzwerk umgewandelt wird;
c) Dotieren des dreidimensionalen Siliciumcarbidnetzwerks, um die elektrische Leitfähigkeit des dreidimensionalen Siliciumcarbidnetzwerks anzupassen;
d) Bilden einer positiven Elektrode (104) einschließlich mehrerer Elektroden (112) unter Verwendung des dreidimensionalen Netzwerks;
e) Bereitstellen eines Separators (106) zwischen der negativen Elektrode (102) und der positiven Elektrode (104); und
f) Vorsehen einer Lieferung von Sauerstoff an die positive Elektrode (104) durch die Gasdiffusionsschicht (108; 152).

2. Elektrochemische Metall/Luft-Zelle (100), die Folgendes umfasst:
2.1 eine negative Elektrode (102) einschließlich einer Form von Lithium als ein aktiver Bestandteil;
2.2 eine positive Elektrode (104) einschließlich mehrerer Elektroden (112), die durch ein dreidimensionales Netzwerk gebildet sind, das aus einem inerten Material gebildet ist, wobei das dreidimensionale Netzwerk ein dreidimensionales Siliciumcarbidnetzwerk ist, das aus einem dreidimensionalen Kohlenstoffnetzwerk umgewandelt wird, indem es einem Siliciumvorläufer bei einer Temperatur von 2000 °C ausgesetzt wurde, wobei das dreidimensionale Kohlenstoffnetzwerk durch Kohlenstoffnanodrähte (150) oder Kohlenstoffnanoröhrchen (150) gebildet ist, die auf einer Gasdiffusionsschicht (152) unter Verwendung eines Nickelkatalysators aufgewachsen sind;
2.3 einen Separator (106) zwischen der negativen Elektrode (102) und der positiven Elektrode (104); und 2.4 eine Sauerstoffversorgung, die mit der positiven Elektrode (104) wirkverbunden ist, die durch die Gasdiffusionsschicht (108, 152) gebildet ist,
2.5 wobei das dreidimensionale Siliciumcarbidnetzwerk ein dotiertes Siliciumcarbidnetzwerk ist.

## Revendications

1. Procédé de formation d'une cellule électrochimique métal/air (100), comprenant les étapes suivantes :
a) former une électrode négative (102) comportant une forme de lithium comme ingrédient actif ;
b) se procurer un réseau tridimensionnel formé à partir d'un matériau inerte,
b1) en se procurant un réseau tridimensionnel de carbone composé de nanofils de carbone (150) ou de nanotubes de carbone (150) élaborés sur une couche de diffusion gazeuse (152) en utilisant un catalyseur au nickel ; et
b2) en exposant le réseau tridimensionnel de carbone à un précurseur de silicium à une température de 2000 °C pour provoquer la transformation du réseau tridimensionnel de carbone en un réseau tridimensionnel de carbure de silicium ;
c) doper le réseau tridimensionnel de carbure de silicium pour régler la conductivité électrique du réseau tridimensionnel de carbure de silicium ;
d) former une électrode positive (104) comportant une pluralité d'électrodes (112) en utilisant le réseau tridimensionnel ;
e) disposer un séparateur (106) entre l'électrode négative (102) et l'électrode positive (104) ; et
f) prévoir une alimentation en oxygène de l'électrode positive (104) par la couche de diffusion gazeuse (108 ; 152) .

2. Cellule électrochimique métal/air (100), comprenant :
2.1 une électrode négative (102) comportant une forme de lithium comme ingrédient actif ;
2.2 une électrode positive (104) comportant une pluralité d'électrodes (112) formées par un réseau tridimensionnel formé à partir d'un matériau inerte, le réseau tridimensionnel étant un réseau tridimensionnel de carbure de silicium transformé à partir d'un réseau tridimensionnel de carbone par exposition de ce dernier à un précurseur de silicium à une température de 2000 °C, le réseau tridimensionnel de carbone étant formé par des nanofils de carbone (150) ou des nanotubes de carbone (150) élaborés sur une couche de diffusion gazeuse (152) en utilisant un catalyseur au nickel ;
2.3 un séparateur (106) entre l'électrode négative (102) et l'électrode positive (104) ; et
2.4 une alimentation en oxygène fonctionnellement reliée à l'électrode positive (104) formée par la couche de diffusion gazeuse (108, 152),
2.5 le réseau tridimensionnel de carbure de silicium étant un réseau de carbure de silicium dopé.
